## Europäisches Patentamt

## European Patent Office

## Office européen des brevets

(19)

(11) Veröffentlichungsnummer: **0 311 838 B1**

(12) **EUROPÄISCHE PATENTSCHRIFT**

(45) Veröffentlichungstag der Patentschrift:
18.09.91 Patentblatt 91/38

(51) Int. Cl.⁵: **C09C 1/24,** C08K 3/22,
C09D 7/00

(21) Anmeldenummer: **88115941.2**

(22) Anmeldetag: **28.09.88**

(54) **Feinteilige Eisenoxidschwarzpigmente, Verfahren zu ihrer Herstellung sowie deren Verwendung.**

(30) Priorität: **10.10.87 DE 3734342**

(43) Veröffentlichungstag der Anmeldung:
**19.04.89 Patentblatt 89/16**

(45) Bekanntmachung des Hinweises auf die
Patenterteilung:
**18.09.91 Patentblatt 91/38**

(84) Benannte Vertragsstaaten:
**DE FR GB IT**

(56) Entgegenhaltungen:
**GB-A- 1 162 786**
**PATENT ABSTRACTS OF JAPAN, Band 9, Nr.**
**308 (P-410)[2031], 04 Dezember 1985**

(73) Patentinhaber: **BAYER AG**
**W-5090 Leverkusen 1 Bayerwerk (DE)**

(72) Erfinder: **Rademachers, Jakob, Dr.**
**Hoeninghausstr. 34**
**W-4150 Krefeld 12 (DE)**
Erfinder: **Ganter, Karl-Werner, Dr.**
**Bethelstr. 13**
**W-4150 Krefeld 1 (DE)**
Erfinder: **Rambold, Wolfgang, Dr.**
**Bethelstr. 12**
**W-4150 Krefeld 1 (DE)**
Erfinder: **Linde, Günter, Dr.**
**Deswatinesstr. 95**
**W-4150 Krefeld 1 (DE)**

## Beschreibung

Die vorliegende Erdindung betrifft feinteilige Eisenoxidschwarzpigmente mit blauschwarzem Farbton, Verfahren zur Herstellung dieser Eisenoxidschwarzpigmente sowie deren Verwendung zum Einfärben in Substraten.

Eisenoxidschwarzpigmente werden im technischen Maßstab bevorzugt nach zwei Verfahren hergestellt, nämlich nach dem Fällungsverfahren und nach dem Anilinverfahren (Ullmanns Encyklopädie der technischen Chemie, 4. Auflage 1979, Seite 603, 1.1.3).

Während man beim Anilinverfahren von metallischem Eisen ausgeht, das durch Nitrobenzol zum Eisenoxid oxidiert wird, dienen beim Fällungsverfahren Eisen-II-salze, in erster Linie Chloride und Sulfate, als Ausgangssubstanzen. Hierbei unterscheidet man zwischen Ein- und Zweistufenfällungsverfahren. Beim Einstufenverfahren wird das zweiwertige Eisen unter Einleiten von Luft in die Eisensalzlösung bei erhöhter Temperatur und bei pH-Werten von leicht saurem bis schwach alkalischem Bereich direkt zum Eisenoxidschwarz, das der chemischen Zusammensetzung des Magnetits $Fe_3O_4$ entspricht, oxidiert und gefällt. Das Zweistufenverfahren hebt sich vom Einstufenverfahren dadurch ab, daß zuerst die Oxidation im sauren Bereich bis um Goethit $\alpha$-FeOOH erfolgt, der dann in wäßriger Suspension bei Bedingungen des Einstufenverfahrens mit frisch gefälltem $Fe(OH)_2$ zum $Fe_3O_4$ umgesetzt wird.

Die erhaltenen Eisenoxidschwarzsuspensionen werden zur Gewinnung des Pigmentes filtriert, gründlich gewaschen, anschließend getrocknet und schließlich gemahlen.

Die Mahlung erfolgt je nach Einsatzgebiet unterschiedlich stark, wobei als Hauptkriterien Siebrückstand und Körnigkeit herangezogen werden. Für die Verwendung von Eisenoxidschwarzpigmenten in der Bauindustrie ist eine normale Mahlung in üblichen Wälzmühlen ausreichend. Dagegen werden häufig bei Einsatzgebieten im Lack- oder Kunststoffsektor feinere Korngrößen gewünscht.

Bei der Mahlung von anorganischen Farbpigmenten ist bekannt, daß in Strahlmühlen weitergehende Zerkleinerungen infolge der dort auftretenden höheren Mahlenergien erreicht werden können. Hierbei wird sehr oft als Mahlmedium hochgespannter Wasserdampf eingesetzt. Diese Art der Mahlung wird allgemein als Mikronisierung bezeichnet (P. Kresse : defazet-aktuell 26, Nr. 5, 1972, S. 255-259).

Von einer Mikronisierung von Eisenoxidschwarzpigmenten durch Dampfstrahlmahlung wurde bislang jedoch abgesehen, da die Gefahr der Oxidation durch Luftsauerstoff am Mühlenaustrag besteht, was sich nachteilig auf die Farbqualität der Pigmente auswirkt. Die Erfahrung hat gezeigt, daß Eisenoxidschwarzpigmente erst bei Temperaturen deutlich unterhalb 100°C an Luft abgefüllt werden können, ohne zu rotem Eisen-III-oxid oxidiert zu werden. Eine denkbare Abkühlung unter Inertgasatmosphäre wäre sehr aufwendig und umständlich.

Bei der Mahlung von Farbpigmenten ist es ebenfalls bekannt geworden, die Mikronisierung in Strahlmühlen mit Luft als Mahlmedium durchzuführen. Jedoch wird bisher in der Technik die Strahlmahlung von Eisenoxidschwarzpigmenten mit Luft nicht durchgeführt. Offensichtlich fürchtet man hierbei unter Einwirkung der hohen Mahlenergie das Auftreten aktive Oberflächen (R. Schrader : Technik 24, 1969, 2. S. 88 bis 96 oder T.G. Burton : Trans. Instn. chem. Engr. 44, 1966, S. T 37-T 41), die eine Reaktion des Magnetits mit dem Sauerstoff der Luft leicht herbeiführen können.

Es ist zwar aus der JP-A 60-140263 die Mikronisierung von magnetischem Eisenoxidschwarz, das beispielsweise als Toner eingesetzt wird, durch Luftsrahlmahlung bekanntgeworden, jedoch wird hierbei das Eisenoxid vor einer Oxidation dadurch geschützt, daß es mit Wachsen und Bindemitteln umhüllt wird, die für den Einsatz des fertigen Toners ohnehin erforderlich sind.

Nach dem heutigen Stand der Technik werden Farbpigmente, die aus Eisenoxidschwarz bestehen und für die Verarbeitung in Lacken oder Kunststoffen bestimmt sind, dadurch erhalten, daß sie einer intensiveren Mahlung in Wälzmühlen mit schärferer Sichtereinstellung unterzogen werden. Die Nachteile dieser Verfahrensweise liegen im hohen Kostenaufwand infolge des geringen Pigmentdurchsatzes, der wegen der erforderlichen hohen Verweilzeit in der Mühle eingehalten werden muß.

Aufgabe dieser Erfindung ist es somit, ein Verfahren zur Herstellung von verbesserten feinteiligen Eisenoxidschwarzpigmenten zur Verfügung zu stellen, welches die Nachteile der beschriebenen Verfahren nicht aufweist.

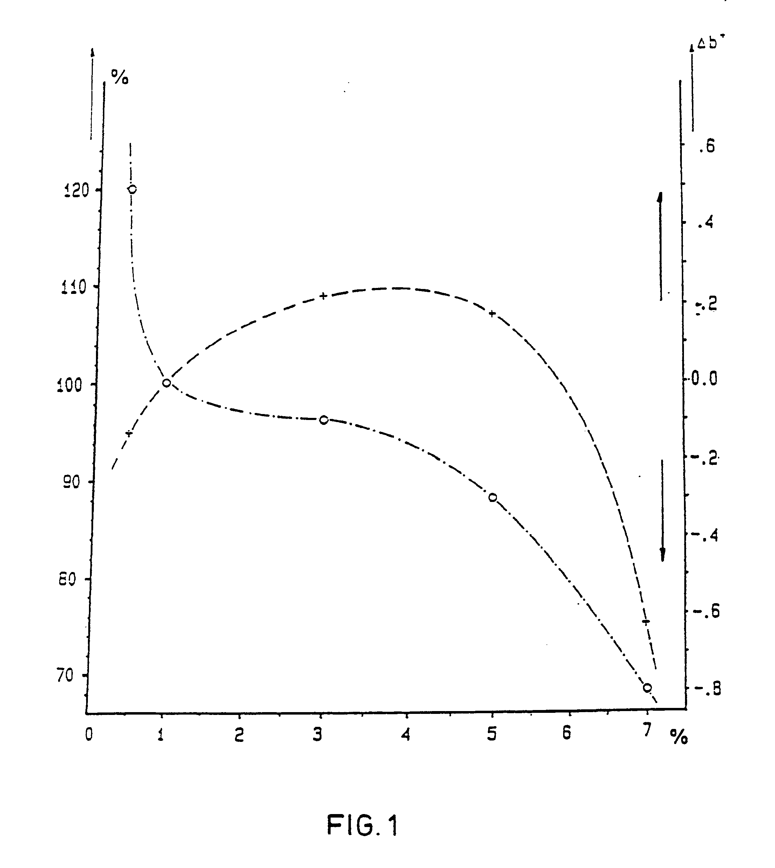

Bei der Mikronisierung von Eisenoxidschwarzpigmente in Strahlmühlen mit Luft als Mahlmedium wurde gefunden, daß in Abhängigkeit von der mit dem Mahlgut mitgegebenen Wassermenge Pigmente mit besserem Farbton und höherer Farbstärke als in der Wälzmühle erhalten werden. Dabei zeigte sich in unerwarteter Weise insbesondere die in Fig. 1 dargestellte positive, jedoch im Bereich von 1 bis 6 Gew.-% zugesetzter Wassermenge sehr unterschiedlich verlaufende Entwicklung der Farbstärke.

In Fig. 1 ist die Farbstärke (linke Ordinate) in Abhängigkeit vom Wassergehalt (Abzisse) dargestellt (Strich-Strich-Kurve).

Gegenstand dieser Erfindung ist somit ein Verfahren zur Herstellung feinteiliger Eisenoxidschwarzpigmente aus Eisenoxidschwarzsuspensionen, die nach dem Fällungs- oder Anilinverfahren erhalten und anschließend filtriert, gewaschen, getrocknet und gemahlen werden, welches dadurch gekennzeichnet ist, daß die Mahlung des getrockneten Eisenoxidschwarzpigmentes in einer Strahlmühle mit Luft als Mahlmedium bei einem Wassergehalt in Höhe von 1 bis 6 Gew.-%, vorzugsweise 3 bis 4 Gew.-%, bezogen auf eingesetztes Eisenoxidschwarz, durchgeführt wird.

Es hat sich gezeigt, daß im erfindungsgemäßen Bereich der zugesetzten Wassermenge, die sowohl mit dem zu mahlenden Eisenoxidschwarz als auch getrennt der Mühle zugeführt werden kann, ein Optimum in der Farbstärke erhalten wird. Dieses Optimum liegt bei einer zugesetzten Wassermenge von 3 bis 4 Gew.-% auf Eisenoxidschwarz bezogen. Im Bereich von 0 bis 1 Gew.-%, besonders aber zwischen 6 und 7 Gew.-%, wurde ein unerwartet starker Abfall der Farbstärke beobachtet.

In Fig. 1 ist der gelbblau-Abstand Δb* (rechte Ordinate) in Abhängigkeit vom Wassergehalt (Abzisse) dargestellt (Strich-Punkt-Kurve). Positive Δb*-Werte bedeuten braunstichige, negative Δb*-Werte blaustichige Pigmente.

Wie aus Fig. 1 weiter hervorgeht, nimmt der Blaustich, gemessen am gelbblau-Abstand Δb* im Weißverschnitt nach DIN 6174, mit dem Wassergehalt zu. Erst unterhalb von 1 Gew.-% Wasseranteil werden die erhaltenen Pigmente braunstichiger im Vergleich zu Wälzmühlen-gemahlenen-Produkten.

Es ist zweckmäßig, die je nach gewünschter Pigmentqualität nach dem erfindungsgemäßen Verfahren erforderliche Wassermenge bereits bei der Trocknung durch eine teilweise Entfernung des Wassers einzustellen.

In einer bevorzugten Ausführungsform wird der Wassergehalt mit dem zu mahlenden Eisenoxidschwarzpigment oder getrennt der Mühle zugeführt.

Die Menge der zugeführten Mahlluft sollte im Bereich von 1 bis 8 Gewichtsteilen, vorzugsweise 3 bis 5 Gewichtsteilen, bezogen auf das zu mahlende Eisenoxidschwarz, eingehalten werden. Geringere Mengen führen zu schlechter Mahlwirkung, höhere Luftanteile über den angegebenen Bereich der Beladungsverhältnisse können die Pigmentqualität negativ beeinflussen. Ebenfalls sollte der Vordruck der Luft bei 2 bis 12 bar, bevorzugt bei 4 bis 8 bar, eingestellt werden.

Zur Unterstützung der Mahlung dienen Mahlhilfsmittel aus der Gruppe der Amine, Alkohole, Carbonsäuren, Siloxane oder Sulfonate in Beimengungen von 0,01 bis 0,1 Gew.-%. Die Zugabe erfolgt entweder mit dem zugesetzten Wasser oder getrennt über eine zweite Zuführung. Als Strahlmühlen können die unterschiedlichsten Bauarten verwendet werden, z.B. Ovalrohrstrahlmühlen, Gegenstrahlmühlen oder Spiralstrahlmühlen. Für die Eisenoxidschwarzpigmentmahlung werden bevorzugt Spiralstrahlmühlen eingesetzt. Sie zeichnen sich durch einen wirkungsvollen integrierten Sichter aus, der wenig zu Anbackungen der feinvermahlenen Teilchen neigt. Die Mahlluft wird durch peripher angeordneten Düsen eingeführt, die es bei Ausführung als Lavaldüsen gestatten, die Luft mit Überschallgeschwindigkeit in die Mahlkammer strömen zu lassen. Die Abscheidung des gemahlenen Pigments gestaltet sich in einfacher Weise über nachgeschaltete Zyklone oder Filter.

Für die Beurteilung der Mahlwirkung wurden folgende Kriterien herangezogen :

1) Siebrückstand nach DIN 53195 mit Wasser als Spülflüssigkeit auf einem Drahtsiebboden der Maschenweite von 40 μm,

2) Körnigkeit nach DIN 53203 mit einem Grindometer nach Hegman, verwendetes Bindemittel : Alkydal®-F 681-Lack (Handelsprodukt der Bayer AG),

3) Farbmetrische Bestimmung der Farbabstände nach DIN 6174 CIELAB-Werte), Bindemittel : Alkydal®-F 48-Lack (Handelsprodukt der Bayer AG),

4) Farbstärke nach DIN 55986. Weißausmischung mit der fünffachen Gewichtsmenge des $TiO_2$-Pigments Bayertitan® R-KB 2, Bindemittel : Alkydal®-F 48-Lack (beides Handelsprodukte der BAYER AG). Gleichstellungskriterium = Helligkeit.

Im Vergleich zu handelsüblichen Produkten, die bei intensiver Mahlung in Wälzmühlen hergestellt werden, ergeben sich nach dem erfindungsgemäßen Verfahren neben den erwähnten farbtechnischen Vorteilen in bezug auf Farbton und Farbstärke Eisenoxidschwarzpigmente mit verbesserter Körnigkeit bei gleichbleibendem Siebrückstand.

Gegenstand dieser Erfindung sind somit auch Eisenoxidschwarzpigmente, die gemäß dem erfindungsgemäßen Verfahren erhältlich sind.

Gegenstand dieser Erfindung ist auch die Verwendung der erfindungsgemäßen Eisenoxidschwarzpigmente zur Einfärbung von Lacken oder Kunststoffen.

Anhand der nachfolgenden Beispiele soll die Erfindung näher erläutert werden, ohne hierdurch eine Einschränkung der Erfindung zu bewirken.

Beispiel 1

Einer mit sechs Düsen bestückten Spiralstrahlmühle mit 200 mm Innendurchmesser und einer Mahlraumhöhe von 20 mm wurden 20 kg pro Stunde Eisenoxidschwarz, hergestellt nach dem Anilin-Verfahren, mit einer Körnung von etwa 0,1 bis 0,5 mm zugeführt. Für den Eintrag über eine Injektordüse waren 13,5 Nm³ pro Stunde Luft erforderlich. Der Wassergehalt des Mahlgutes betrug 5,0 Gew.-%. Über die Mahldüsen, die einen freien Innendurchmesser von 1,3 mm aufwiesen, wurden 33,5 Nm³ pro Stunde Luft mit einem Vordruck von 8 bar in die Mühle geleitet. Die gesamt eingebrachte Luftmenge betrug demnach 60 kg pro Stunde. Das abgeschiedene gemahlene Material ergab bei der Prüfung einen Siebrückstand über 40 µm von 0,001%, eine Körnigkeit von 30 µm sowie eine farbmetrische Auswertung im Weißverschnitt mit der fünffachen Gewichtsmenge Bayertitan R-KB 2 (Handelsprodukt der Bayer AG) im Vergleich zum herkömmlich mikronisierten Eisenoxidschwarzpigmenttyp Bayferrox® 318 M (Handelsprodukt der Bayer AG — nachstehend als Vergleichspigment bezeichnet) mit folgenden Farbabständen : Rotgrün-Abstand Δa* = – 0,2 und Gelbblau-Abstand Δb* = – 0,3. Das Pigment wirkt blauschwärzer als das zum Vergleich herangezogene Pigment. Die Farbstärke betrug 107% des Vergleichspigmentes. Der Siebrückstand des Vergleichspigmentes lag bei 0,002 Gew.-%, die Körnigkeit bei 40 µm.

## Beispiel 2

Die Mahlung erfolgte wie in Beispiel 1 mit folgenden Abweichungen : Der Luftvordruck wurde auf 4 bar gesenkt. Entsprechend betrug die Gesamtmahlluft 25 kg pro Stunde bei einem Produktdurchsatz von 8,3 kg pro Stunde. Der Wassergehalt im Aufgabegut lag bei 3,0 Gew.-%, der sich während der Mahlung auf 1,0 Gew.-% erniedrigte.

Die farbmetrische Auswertung im Weißverschnitt ergab einen Δa*-Wert von – 0,1 und einen Δb*-Wert von ebenfalls – 0,1. Das Pigment ist demnach leicht blaustichiger als das Vergleichspigment. Die Körnigkeit lag bei 30 µm, der Siebrückstand über 40 µm bei 0,002%. Die Farbstärke betrug 109% des Vergleichspigmentes.

## Beispiel 3

Die Mahlung erfolgte wie in Beispiel 2, jedoch unter Zusatz von 0,1 Gew.-% Monopropylenglykol. Die farbmetrische Auswertung ergab in der Weißausmischung einen Δa*-Wert von – 0,2, einen Δb*-Wert von – 0,7 und einen Farbstärke von 110°C des Vergleichspigmentes. Der Siebrückstand lag bei 0,001 Gew.-%, die Körnigkeit bei 25 µm.

## Beispiel 4

Die Mahlung erfolgte wie in Beispiel 2, jedoch mit einem Wassergehalt des ungemahlenen Eisenoxidschwarz in Höhe von 1,0 Gew.-%. Das erhaltene mikronisierte Pigment lag in Farbton und Farbstärke im Bereich des Vergleichspigmentes. Auch Siebrückstand und Körnigkeit waren mit den Werten des Vergleichspigmentes identisch.

## Gegenbeispiel 1

Bei dieser Mahlung wurde ein Mahlgut mit einem Wassergehalt von 0,5 Gew.-% aufgegeben. Die sonstigen Bedingungen blieben wie in Beispiel 1 angegeben. Die farbmetrische Auswertung im Weißverschnitt ergab einen Δa*-Wert von – 0,1 und einen Δb*-Wert von + 0,5. Das Produkt war durch den höheren Gelb-Anteil braunstichiger als das Vergleichspigment. Die Farbstärke betrug nur 95%, der Siebrückstand lag bei 0,002% und die Körnigkeit bei 40 µm.

## Gegenbeispiel 2

Die Mahlung erfolgte mit einem Eisenoxidschwarz, das einen Wassergehalt von 7 Gew.-% aufwies. Das erhaltene Pigment zeigte einen Δa*-Wert von – 0,1 und einen Δb*-Wert von – 0,8 im TiO$_2$-Verschnitt. Die Farbstärke betrug nur 75%. Die Körnigkeit lag bei 45 µm, der Siebrückstand bei 0,002%.

## Patentansprüche

1. Verfahren zur Herstellung feinteiliger Eisenoxidschwarzpigmente aus Eisenoxidschwarzsuspensionen, die nach dem Fällungs- oder Anilinverfahren erhalten und anschließend filtriert, gewaschen, getrocknet und gemahlen werden, dadurch gekennzeichnet, daß die Mahlung des getrockneten Eisenoxidschwarzpigmentes in einer Strahlmühle mit Luft als Mahlmedium bei einem Wassergehalt in Höhe von 1 bis 6 Gew.-%, vorzugsweise 3 bis 4 Gew.-%, bezogen auf eingesetztes Eisenoxidschwarz, durchgeführt wird.

2. Verfahren gemäß Anspruch 1, dadurch gekennzeichnet, daß der Wasseranteil mit dem zu mahlenden Eisenoxidschwarzpigment oder getrennt der Mühle zugeführt wird.

3. Verfahren gemäß einem der Ansprüche 1 und 2, dadurch gekennzeichnet, daß ein Gewichtsverhältnis von Mahlluft und zu mahlendem Produkt zwischen 1 und 8, vorzugsweise 3 und 5, eingestellt wird.

4. Verfahren gemäß einem oder mehrerer der Ansprüche 1 bis 3, dadurch gekennzeichnet, daß der Vordruck der Mahlluft im Bereich von 2 bis 12 bar, vorzugsweise von 4 bis 8 bar, gehalten wird.

5. Verfahren gemäß Ansprüche 1 bis 4, dadurch gekennzeichnet, daß dem Eisenoxidschwarzpigment Mahlhilfsmittel aus der Gruppe der Amine, Alkohole, Carbonsäuren, Siloxane und/oder Sulfonate zugefügt werden.

6. Eisenoxidschwarzpigmente, erhalten gemäß einem oder mehrerer der Ansprüche 1 bis 5.

7. Verwendung der Eisenoxidschwarzpigmente gemäß einem oder mehrerer der Ansprüche 1 bis 5 zur Einfärbung von Lacken oder Kunststoffen.

## Claims

1. A process for the production of fine-particle iron oxide black pigments from iron oxide black suspensions which are obtained by the precipitation or aniline method and are subsequently filtered, washed, dried and ground, characterized in that the dried iron oxide black pigment is ground in a jet mill with air as the grinding medium at a water content of 1 to 6% by weight and preferably 3 to 4% by weight, based on the iron oxide black used.

2. A process as claimed in claim 1, characterized in that the water is introduced into the mill either together with or separately from the iron oxide black pigment to be ground.

3. A process as claimed in claim 1 or 2, characterized in that a ratio by weight between the grinding air and the product to be ground of 1 to 8 : 1 and preferably 3 to 5 : 1 is adjusted.

4. A process as claimed in one or more of claims 1 to 3, characterized in that the grinding air is kept under a pressure of 2 to 12 bar and preferably 4 to 8 bar.

5. A process as claimed in claims 1 to 4, characterized in that grinding aids from the group consisting of amines, alcohols, carboxylic acids, siloxanes and/or sulfonates are added to the iron oxide black pigment.

6. Iron oxide black pigments obtained by the process claimed in one or more of claims 1 to 5.

7. The use of the iron oxide black pigments obtained by the process claimed in one or more of claims 1 to 5 for pigmenting paints or plastics.

## Revendications

1. Procédé de production de pigments d'oxyde de fer noir finement divisés à partir de suspensions d'oxyde de fer noir, qui sont obtenues par le procédé de précipitation ou le procédé à l'aniline puis filtrées, lavées, séchées et broyées, caractérisé en ce que le broyage du pigment d'oxyde de fer noir séché est effectué dans un broyeur à jet utilisant l'air comme fluide de broyage pour une teneur en eau à hauteur de 1 à 6% en poids, de préférence de 3 à 4% en poids par rapport à l'oxyde de fer noir utilisé.

2. Procédé suivant la revendication 1, caractérisé en ce que la fraction d'eau est amenée au broyeur avec le pigment d'oxyde de fer noir à broyer ou séparément.

3. Procédé suivant l'une des revendications 1 et 2, caractérisé en ce qu'on règle un rapport en poids de l'air de broyage au produit à broyer entre 1 et 8, de préférence entre 3 et 5.

4. Procédé suivant une ou plusieurs des revendications 1 à 3, caractérisé en ce que la pression d'admission de l'air de broyage est maintenue dans la plage de 2 à 12 bars, de préférence de 4 à 8 bars.

5. Procédé suivant les revendications 1 à 4, caractérisé en ce qu'on ajoute au pigment d'oxyde de fer noir des substances auxiliaires de broyage du groupe d'amines, d'alcools, d'acides carboxyliques, de siloxanes et/ou de sulfonates.

6. Pigments d'oxyde de fer noir obtenus selon l'une ou plusieurs des revendications 1 à 5.

7. Utilisation des pigments d'oxyde de fer noir suivant une ou plusieurs des revendications 1 à 5 pour la coloration de laques ou de matières plastiques.

FIG. 1